# EUROPEAN PATENT SPECIFICATION

(11) **EP 0 916 258 B1**
(45) Date of publication and mention of the grant of the patent: **03.03.2004**
(21) Application number: 98309189.3
(22) Date of filing: 10.11.1998
(51) Int. Cl.: A01K 89/01

(54) **Spinning reel**
Angelrolle
Moulinet de pêche

(30) Priority: 14.11.1997 JP 31384797; 26.12.1997 JP 35953197
(43) Date of publication of application: 19.05.1999
(73) Proprietor: Shimano Inc., Osaka 590-8577 (JP)
(72) Inventor: Aratake, Seiichi, Shizuoka-shi, Shizuoka (JP); Kawabe, Yuzo, Izumi-shi, Osaka (JP); Morise, Taisei, Sakai-shi, Osaka (JP); Hirayama, Hirokazu, Sakai-shi, Osaka (JP)
(74) Representative: Pacitti, Paolo

(56) References cited:
- DE-A- 2 030 253
- GB-A- 2 300 793
- US-A- 3 342 442

## Description

The present invention relates to a spinning reel, wherein a fishing line guide mechanism is mounted on one of a pair of bail support member which are rotatably supported at tip ends of a pair of rotor arms of a rotor, the line guide mechanism for guiding a fishing line to a spool.

### B. Description Of The Related Art

In a spinning reel, a rotor is configured to rotate about a spool. A fishing line guide mechanism for guiding a fishing line on to a spool is mounted at an end of one of a pair of bail support members. The bail support members and the fishing line guide mechanism are rotatable together with the rotor about the spool. The bail support members and the line guide mechanism are pivotal between a line release position and a line winding position. The fishing line guide mechanism is provided with a stationary shaft fixed at a first end to one of the bail support members, a stationary shaft cover which is fixed to a second end of the stationary shaft and on which one end of the bail is mounted, and a line roller rotatably supported on the stationary shaft between the stationary shaft cover and the bail support member. In the fishing line guide mechanism, the bail is swung to the line release position when the fishing line is to be released, and the fishing line is released from the front end side of the spool. Also, in winding the fishing line onto the spool, when the bail is swung on the fishing line winding position and a handle is rotated, the fishing line is guided and brought into contact with an outer circumferential surface of the line roller by the bail, and is guided by the line roller and wound around the outer circumference of the spool with the direction of the fishing line being changed.

In the spinning reel, the fishing line is released when the bail support members and the line guide mechanism are pivoted to the line release position. The fishing line is wound around the spool and an axis defined therein, the axis extending in a direction corresponding to the direction the fishing line travels when released from the spool. When the fishing line is released or cast out from the front end of the spool, the fishing line does so in the form of a spiral shape as it comes off the spool such that a line twist is generated in the fishing line. As the fishing line is wound back around the spool, the fishing line is drawn in along a path parallel to the axis of the spool and is wound from an axial direction of the spool about the circumference of the spool as a result of being guided by the bail and the line roller. As a result, twists in the line occur, the twist having a direction that is reversed from that in a fishing line release mode. For example, in a spinning reel in which the fishing line is to be wound clockwise as viewed from the front side, when the fishing line is wound around the spool, twists in the line are generated in the fishing line with counterclockwise twists as viewed from an upstream side in the winding direction. In general, in the spinning reel, in order to avoid twisting the fishing line fed from the spool, the fishing line is wound around the spool in the twisted condition. In this case, if the same line twists are generated in an opposite directions in the line feeding mode and the line winding mode, there would be no line extra twist left in the fishing line wound around the spool.

However, while the fishing line is being guided by the line roller, in some cases, extra line twists are generated in the fishing line in accordance with the contact between the line roller and the fishing line. More specifically, a magnitude and/or direction of force applied to the fishing line is changed due to the contact resistance with the line roller so that an unexpected movement or bending force is applied to the fishing line, resulting in the generation of extra line twists, as mentioned above. As a result, the conventional fishing reel suffers from a problem that the line twist is left in the fishing line wound around the spool so that it is difficult to smoothly feed the fishing line and indeed may be impossible to cast a fishing device in a desired direction.

Japanese Patent Application Laid-Open Nos. Hei 8-23834 and Hei 8-23836 disclose technical approaches to overcome the above-described line twisting problem. The spinning reels disclosed in the two above publications are provided with a fishing line guide mechanism in which a line roller is formed into a tapered shape gradually increasing its diameter in the line winding rotational direction of the rotor (on the front end side of the line roller) and a line guide portion is formed on the bail support member side of the line roller or on the bail support member. In this fishing line guide mechanism, the line roller is disposed so that the fishing line is biased toward the bail support member and the fishing line is guided to the spool while the fishing line is in contact with the line guide portion to thereby restrict the movement thereof in the axial direction. With such an arrangement, the movement of the fishing line in the axial direction is suppressed by the line roller and the line engagement between the line roller and the bail support member is prevented. Also, the line roller is formed into the tapered shape having its diameter gradually increased in the line winding rotational direction so that a frictional force difference is generated between the fishing line and the large diameter side and the small diameter side of the line roller and a reversed line twist from that of the line feeding mode is generated in the fishing line.

In the above-described conventional fishing line guide mechanism, since the fishing line is biased toward the bail support member and the fishing line is brought into contact with the line guide portion for guidance, the movement of the fishing line is suppressed and the fishing line engagement is moderated. However, when the fishing line is brought into contact with the line guide portion located on the bail support member side, the line twist in the same direction as that in the line feeding direction is generated, so that it is impossible to accurately generate the line twist that is reversed to that in the line feeding mode.

Also, since the line twist that is reversed to that in the line feeding mode is generated by utilizing the fact that the frictional force on the large diameter side is greater than that on the small diameter side in the circumferential surface of the line roller formed in the form of a tapered shape having the diameter gradually increased in the line winding rotational direction of the rotor (on the front end side of the line roller), it is difficult to accurately generate the line twist.

### SUMMARY OF THE INVENTION

An object of the present invention is to accurately produce a line twist is the reverse of a line feeding mode, in the fishing line that is passing through the line roller.

In accordance with the present invention, a fishing line guide mechanism for a spinning reel is mounted on a first of two bail support members that are mounted for pivotal movement at tip ends of a pair of rotor arms of a rotor of the spinning reel. The fishing line guide mechanism guides a fishing line onto a spool of the spinning reel. The fishing line guide mechanism includes a stationary shaft, a stationary shaft cover and a line roller. Further, a reverse twist generating means including a first positioning means, a second positioning means and a biasing means. The second positioning means is on a side of the line roller proximate the first bail support member relative to the stationary shaft and the first positioning means is on a side of the second positioning means opposite from the first bail support member. The first positioning means is configured for directing engagement between the line roller and the fishing line as the fishing line extends from a guide of a fishing rod toward the line roller in response to rotation of the rotor. The second positioning means is configured for directing engagement between the line roller and the fishing line as the fishing line extends from the line roller toward the spool in response to rotation of the rotor. The biasing means is configured for biasing the fishing line toward the first positioning means. The reverse twist generating means generates a twist in the fishing line that is reversed from a direction of twisting which occurs in the fishing line in response to the fishing line being released from the spool.

In the above fishing line guide mechanism, as the fishing line approaches the line roller it is biased into contact with the line roller at a first position. When the fishing line is released away from the line roller toward the spool, the fishing line is positioned at a different position on the line roller. Thus, the position where the fishing line is released toward the spool is displaced with respect to the stationary shaft cover side. The change in position of the fishing line as it engages the line roller compared to the position of the fishing line as it leaves the line roller makes it possible to predetermine the direction of a generated line twist in the fishing line as it is wound around the spool. It is therefore possible to generate the line twist in a reverse direction with high precision.

Preferably, the first positioning means includes a line guide surface formed on a circumferential surface of the line roller, the line guide surface having a varying diameter that increases toward the stationary shaft cover.

Preferably, the second positioning means is an inflection point on the circumferential surface of the line roller, the inflection point having a small diameter. The small diameter defines a smallest diameter of all portions of the circumferential surface of the line roller.

Preferably, the biasing means includes an orientation of the stationary shaft. Specifically, an angle is defined between a portion of the fishing line and a straight line. The angle lies in a plane defined by the fishing line and the straight line. The portion of the fishing line extends from a point of contact with the line roller to the guide of the fishing rod. The straight line is parallel with an axis of rotation of the stationary shaft and extends from the point of contact. The angle is an acute angle.

Preferably, the pair of rotor arms of the rotor of the spinning reel pivot about a pivot line extending therebetween. The pivot line further extends through the spool proximate a central axis of the rotor. A tangential line is defined about the central axis of the rotor at a radius defined proximate one of the pair of rotor arms. The tangential line is perpendicular to the pivot line. The axis of rotation of the stationary shaft and the tangential line define an acute angle such that one end of the stationary shaft is closer to the spool than an other end of the stationary shaft.

Preferably, the line guide surface is an annular, ring-shaped surface that is slightly inclined with respect to a plane defined perpendicular to the axis of rotation of the stationary shaft.

Preferably, the line guide surface is an annular surface that is perpendicular to the stationary shaft.

Preferably, the line guide surface is inclined toward the stationary shaft cover.

Preferably, a distance in an axial direction, relative to the axis of rotation of the stationary shaft, between an inner circumferential portion of the line guide surface and an outer circumferential portion of the line guide surface is in the range of 1 to 15% of a maximum length of the line roller.

Preferably, a radial height of the line guide surface between the inner circumferential portion of the line guide surface and the outer circumferential portion of the line guide surface is in the range of 1 to 15% of a maximum outer diameter of the line roller.

Preferably, the outer circumferential portion of the line guide surface is formed with a chamfer in a cross section thereof.

Preferably, a radius of the chamfer is in the range of 0.1 to 0.5 mm.

Preferably, the inner circumferential portion of the line guide surface is formed with a corner having an angular shape in cross section.

### BRIEF DESCRIPTION OF THE DRAWINGS

Fig. 1 is a side elevation view showing a spinning reel according with a first embodiment of the present invention;
Fig. 2 is a part cross-section, part elevation front view showing the spinning reel depicted in Fig. 1;
Fig. 3 is a fragmentary, part cross-section, part elevation front view showing a fishing line guide mechanism of the spinning reel depicted in Figs. 1 and 2, only in an enlarged scale;
Fig. 4 is a fragmentary side elevation view showing features of the fishing line guide mechanism depicted in Figs. 2, 3 and 4;
Fig. 5 is a fragmentary cross-section view showing a line roller portion of the line guide mechanism depicted in Figs. 2-4, on an enlarged scale;
Fig. 6 is a view similar to Fig. 4, showing a second embodiment of the present invention;
Fig. 7 is a view similar to Fig. 5, showing details of the line roller portion in accordance with the second embodiment depicted in Fig. 6;
Fig. 8 is a view similar to Figs. 5 and 7, showing third embodiment of the present invention, the third embodiment being a modification of the first embodiment depicted in Fig. 5; and
Fig. 9 is a view similar to Figs. 5, 7 and 8, showing a fourth embodiment, the fourth embodiment being a modification of the second embodiment depicted in Fig. 7.

### DETAILED DESCRIPTION OF THE PREFERRED EMBODIMENT

A first embodiment of the present invention is described below.

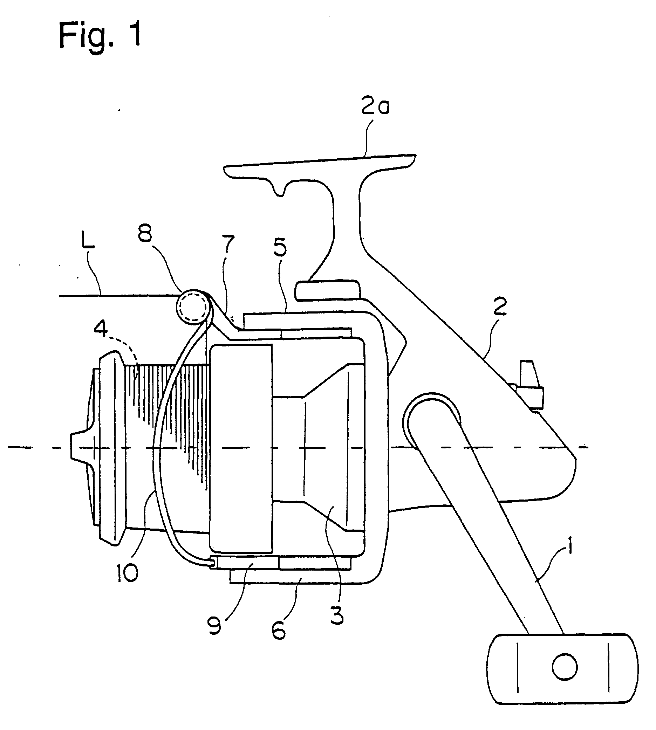

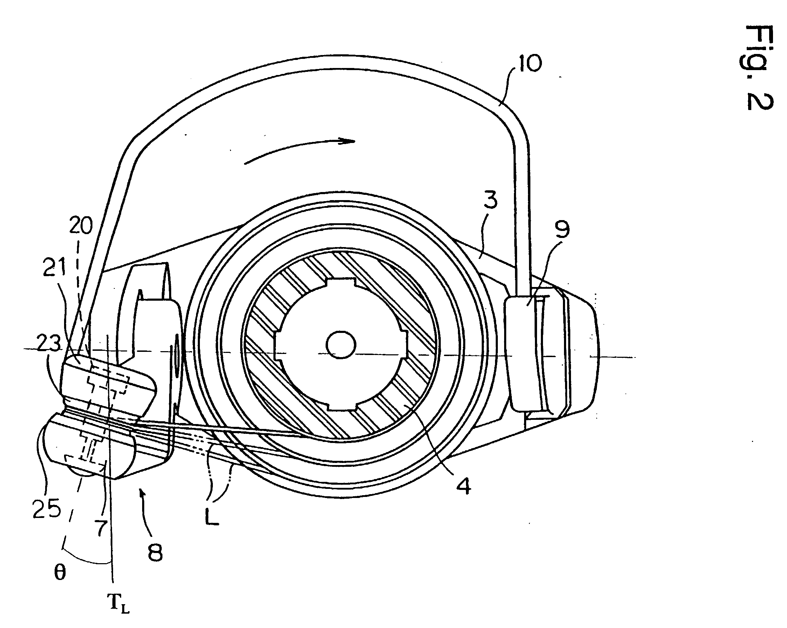

A spinning reel in accordance with a first embodiment of the present invention shown in Figs. 1 and 2 is provided with a reel body 2 having a handle 1, a rotor 3 rotatably supported on the front portion of the reel body 2, and a spool 4 which is disposed on the front portion of the rotor 3 and around which a fishing line L is wound in response to rotation of the rotor. The rotor 3 and the spool 4 define a central axis about which the rotor 3 rotates.

A mounting portion 2a is formed on the upper portion of the reel body 3 for mounting the spinning reel onto a fishing rod. The spinning reel also includes within the reel body 2, a rotor drive mechanism (not shown) for rotating the rotor 3 and an oscillating mechanism (not shown) for moving the spool 4 back and forth along the central axis thereof in response to rotation of the handle 1. The oscillating movement of the spool 4 along with the rotation of the rotor 3 provide a means for uniformly and evenly winding the fishing line L around the spool 4. It should be noted, that as the fishing line L is wound around the spool 4 by the rotor 3, the fishing line L follows a spiraling path.

The rotor 3 has a first arm portion 5 and a second arm portion 6 extending forward generally parallel to the central axis. The two arm portions 5 and 6 extend from opposite circumferential sides of the rotor facing to each other. A first bail support member 7 is pivotally mounted on an inner surface of a front end of the first arm portion 5. A fishing line guide mechanism 8 for guiding the fishing line onto the spool 4 is mounted at the front end of the first bail support member 7. A second bail support member 9 is pivotally mounted on an inner surface of a front end of the second arm portion 6. A bail 10 is provided between the fishing line guide mechanism 8 and the second bail support member 9.

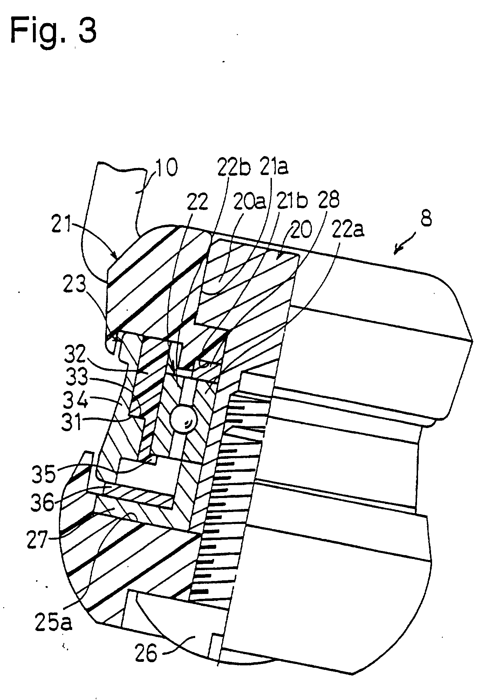

The structure of fishing line guide mechanism 8 is described below with respect to Figs. 2, 3, 4 and 5. The fishing line guide mechanism 8 includes a stationary shaft 20 that is fixed at one end to the first bail support member 7. A stationary shaft cover 21 is formed to receive and support one end of the stationary shaft 20, as shown in Fig. 3. A roller bearing 22 is fitted on the stationary shaft 20, and a cylindrically shaped line roller 23 is fitted onto the roller bearing 22, as is described in greater detail below.

The stationary shaft 20 is formed with a flange portion 20a having a large diameter. The flange portion 20a is retained in a retainer hole 21a formed in the stationary shaft cover 21. A distal end of the stationary shaft 20 is fixed by a stationary screw 26 to a fishing line guide member 25 formed at a tip end of the first bail support member 7.

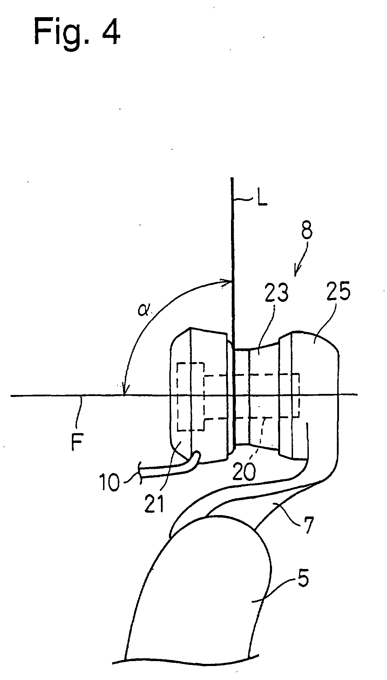

As shown in Fig. 4, during use of the spinning reel, the fishing line L extends from the line roller 23 to a guide (not shown) of a fishing rod (not shown). A rotation axis (not shown in Fig. 4) is defined by the line roller 23 and the stationary shaft 20. A line F is defined in a direction that is generally parallel to the undepicted rotation axis of the line roller 23, such that the line F intersects the point where the fishing line L first engages the line roller 23. The stationary shaft 20 is fixed to the fishing line guide member 25 such that, in a plane defined by the fishing line L and the straight line F, an angle α is defined between the fishing line L and the straight line F and is an acute angle ( α <90° ). Therefore, the line F is not quite perpendicular to a rotational axis of the rotor 3. Or, in other words, the rotational axis of the stationary shaft 20 is not perpendicular to the rotational axis of the rotor 3, but may be close to being so if the angle α is set close to 90°. Also, as shown in Fig. 2, the distal end of the stationary shaft 20 is fixed to the fishing line guide member 25 so that the tip end thereof extends more toward the spool 4 than the distal end does. By fixing the stationary shaft 20 in the above described orientation, when tension is applied to the fishing line L in a fishing line winding operation or mode, the portion of the fishing line L extending over the line roller 23 is displaced on the side of the stationary shaft cover 21. In other words, the fishing line L extends around the line roller 23 defining a plane that is not perpendicular to the rotational axis of the line roller 23.

As is shown in Fig. 4, the fishing line guide member 25 is formed integrally with the tip end of the first bail support member 7 and has a spherical shape.

The stationary shaft cover 21 and the fishing line guide member 25 have similar shapes. The retainer hole 21a retains the flange portion 20a of the stationary shaft 20 and is formed at the center of the stationary shaft cover 21. The stationary shaft cover 21 is held in place by the stationary shaft 20 and other members (described below) such that the stationary shaft cover 21 and the fishing line guide member 25 are spaced apart from one another.

The roller bearing 22 is fitted on the stationary shaft 21 between the fishing line guide member 25 and the stationary shaft cover 21 for rotatably supporting the line roller 23. A bearing support member 27 is formed with a cylindrical portion and a flange where the flange is retained in a recess 25a formed in a portion of the fishing line guide member 25 and the cylindrical portion of the bearing support member 27 engages an inner race 22a of the roller bearing 22. A spacer 28 is fitted into a recess 21b of the stationary shaft cover 21. The spacer 28 is in contact with an recess 21b of the stationary shaft cover 21. With such an arrangement, the inner race 22a is retained in position in the axial direction by the spacer 28 and the bearing support member 27.

The line roller 23 is fitted onto the roller bearing 22 such that in may not move in the axial direction, along the rotational axis of the line roller 23. The line roller 23 is fitted onto an outer race 22b of the roller bearing 22 in the direction of the stationary cover 21. The line roller 23 includes a first sleeve member 32 made of resin material and has on an outer circumferential surface thereof a stepped portion 31 with a larger diameter on the stationary shaft 20 side thereof. The line roller 23 also includes a second sleeve member 34 that is fitted on the outer circumferential surface of the first sleeve member 32. The second sleeve member 34 is made of brass and has on its inner circumferential surface a stepped portion 33 engaged with the stepped portion 31. The first sleeve member 32 is provided at its inner circumferential surface with a retainer portion 35 which extends radially inward for engagement with end face of the outer race 22b of the roller bearing 22 on the side of the fishing line guide member 25. With such an arrangement, the line roller 23 is not movable in a direction toward the stationary shaft cover 21. As a result of the above configuration of the line roller 23, a fine narrow gap (not shown) is always defined between the line roller 23 and the stationary shaft cover 21.

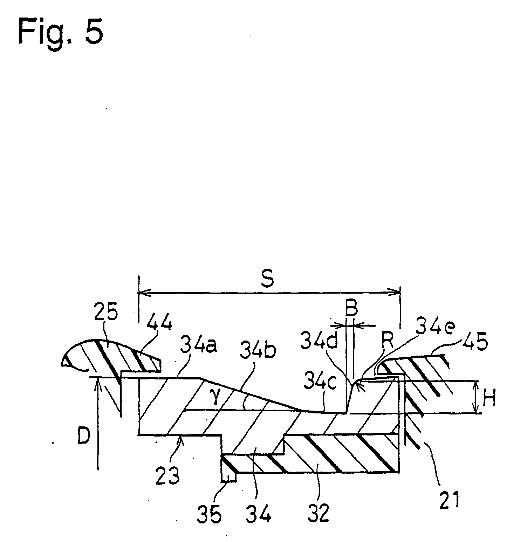

The various surfaces of the second sleeve member 34 of the line roller 23 are described below with specific reference to Fig. 5. The second sleeve member 34 includes a parallel surface 34a, a tapered surface 34b, a first slant surface 34c, a line guide surface 34d and a second slant surface 34e, all formed in the listed order going from left to right in Fig. 5, from the fishing line guide member 25 side to the stationary shaft cover 21 side. The parallel surface 34a is generally parallel with the rotational axis (not shown) defined by the line roller 23 and the stationary shaft 20.

The parallel surface 34a and the portion of the second slant surface 34e having a maximum diameter (the right end in Fig. 5) have substantially the same outer diameter. Further, the outer diameter of the first slant surface 34c is smaller than either of the outer diameter of the parallel surface 34a and the second slant surface 34e. The tapered surface 34b has a conical shape that is formed so as to smoothly connect the parallel surface 34a and the first slant surface 34c to each other. Preferably, the taper of the tapered surface 34b with respect to the rotational axis (not shown) of the line roller 23 is an angle γ in the range of, for example, 5 to 10 degrees. The first slant surface 34c is slanted so that its diameter decreases going toward the right side of Fig. 5. However, it should be understood that the angle y of the tapered surface 34b could be anywhere in a range of 0 to 15 degrees. The second slant surface 34e is slanted so that its diameter is increases going toward the right side of Fig. 5. It is preferable that its slant angle of the second slant surface 34e is in the range of 0 to 5 degrees with respect to a plane perpendicular to the rotational axis of the line roller 23.

The line guide surface 34d of the second sleeve member 34 is formed into a flange shape so as to be somewhat slanted toward the side of the stationary shaft cover 21. The fishing line L displaced on the side of the stationary shaft cover 21 in the line winding mode is brought into contact with the line guide surface 34d. A height H of the line guide surface 34d is, for example, 1.3 mm. The portion of the line roller 23 having a diameter D for example, 11.9 mm. It is preferable that the height H is in the range of 1 to 15% of the maximum outer diameter D. If the height H of the line guide surface 34d is set in such a range, the frictional force between the line guide surface 34d and the fishing line L is small. Even if the fishing line L is brought into contact with the line guide surface 34d, excessive friction will not likely be generated.

In one configuration of the first embodiment, an axial length B of the line guide surface 34d is, for example, 0.6 mm, and an entire length S of the line roller 23 is, for example, 5 mm. It is preferable that the axial length B is in the range of 1 to 15% of the entire length S. The axial length B is important because of interaction between the line guide surface 34d and the fishing line L. For instance, as the fishing line L is wound around the spool 4, the fishing line L comes from the last guide (not shown) in the fishing rod (not shown) and extends to the line roller 23. Looking at Fig. 2, it should be understood that the fishing line L comes from above the plane defined by the depiction in Fig. 2. Further, with respect to Fig. 2, the guide (not shown) of the fishing rod (not shown) is typically located proximate a point on a line that extends out from the center of the spool 4 and rotor 3. Therefore, as the fishing line L is drawn from the guide (not shown) the line L first typically engages the line roller 23 at the surface 34c or at a radially outer portion of the line guide surface 34d and engages at least a portion the radial width of the line guide surface 34d. Further, as is indicated in Figs. 2 and 4, as the fishing line L leaves the line roller 23 and is wound around the spool 4, the fishing line L again further engages the line guide surface 34d. Engagement between the line guide surface 34d and the fishing line L imparts a line twist in a reverse direction to the fishing line L as it is wound around the spool 4. As should be clear from the above and from Figs. 2, 3 and 5, the axial length B of the line guide surface 34d is further important for determining the contact position and the release position of the fishing line L relative to the line guide surface 34d.

A border portion between the line guide surface 34d and the second slant surface 34e, i.e., the outer side end portion of the line guide surface 34d is rounded or beveled in an arcuate shape in cross section. It is preferable that a radius R of the arcuate portion is in the range of 0.1 to 0.5 mm. If the outer circumferential end portion is thus rounded or beveled, the fishing line L is likely to slide smoothly relative to the line guide surface 34d when the fishing line L contacts the outer circumferential side thereof. As a result, undesirable twists in the line hardly occur in this portion of the line roller 23.

Also, a border portion between the line guide surface 34d and the first slant surface 34c, i.e., the inner circumferential end portion is formed in an angular shape in cross section. If the inner circumferential end portion is not rounded or beveled but formed into the angular shape, the fishing line is likely to follow the inner circumferential end portion of the line guide surface 34d. As a result, the line twist caused by the contact with the first slant surface 34c will be accurately produced. A thrust bearing ring 36 made of Durcon™ (resin) is interposed between the end face, on the line guide member 25 side, of the line roller 23 and the flange portion of the bearing support member 27. The thrust bearing ring 36 is used to prevent the direct contact between the line roller 23 and the fishing line guide member 25.

It should be understood that as the fishing line L extends from the guide (not shown) of the fishing rod (not shown) toward the line roller 23 and enters into engagement with the line roller 23, the orientation of the line roller with respect to the spool 4 (and hence with respect to the guide) biases the fishing line toward the line guide surface 34d. Specifically, the first bail support member 7 and the second bail support member 9 pivot about an axis (not shown) that extends through the rotor 3. A tangential line T_{L} is perpendicular to the axis defined by the pivoting movement of the first bail support member 7 and the second bail support member 9. The tangential line T_{L} is also tangent to a circle (not shown) whose center is the center of the rotor 3 at a point which falls on the axis defined by the pivoting movement of the first bail support member 7 and the second bail support member 9. As can be seen in Fig. 2, the stationary shaft 20 is not parallel to tangential line T_{L} but rather is offset from the tangential line T_{L} by an angle θ. The angle θ is preferably less that 25° but greater than 2°. The offset orientation of the stationary shaft 20 creates a biasing effect on the fishing line L urging it into contact with the line guide surface 34d.

### Guide Operation of Fishing Line

When the rotor 3 is rotated by the handle 1, the fishing line L is wound around the spool 4 while being guided by the bail 10 and the line roller 23. In this case, the fishing line L is guided from the line guide surface 34d of the line roller 23 to the spool 4. Incidentally, since the line roller 23 is rotated smoothly by the action of the roller bearing 22 in accordance with the passage of the fishing line L, a large resistance is not applied to the fishing line L and the fishing line may pass smoothly. As shown in Fig. 2, even if the amount of the fishing line L wound around the spool 4 is changed to thereby change its outer circumferential diameter, the fishing line L is guided always from a constant point to the spool 4 by the line guide surface 34d. As a result, the amount of the twist generated in the fishing line L becomes stable. There is almost no fear that the extra twist, due to the difference between the line twist in the feeding mode and the line twist in the winding mode of the fishing line L, is left in the fishing line L.

In the above-described operation, the fishing line L is guided along the tapered circumference 44 of the fishing line guide member 25 and the tapered circumference 45 of the stationary shaft cover 21 from the bail 10 and fed to the circumference of the line roller 23. Then, the fishing line L is displaced toward the line guide surface 32d by the force applied to the fishing line L and the line roller 23 is biased toward the stationary shaft cover 21 by its reactive force. However, the inner circumferential surface of the first sleeve member 32 of the line roller 23 is not movable in a direction toward the stationary shaft cover 21 by the retainer portion 35, and the first sleeve member 32 and the second sleeve member 34 are not movable in the direction toward the stationary shaft cover 21 in the same manner by the stepped portions 31 and 33. Accordingly, even if the line roller 23 is biased toward the stationary shaft cover 21, it hardly contacts with the stationary shaft cover 21.

Also, since the fishing line L is displaced toward the stationary shaft cover 21, the fishing line L is released toward the spool 4 on the side of the first bail support member 7 from the position where the fishing line L is in contact with the circumferential surface of the line roller 23. Then, when the fishing line L is brought into contact with the line roller 23, the fishing line is in contact with the flanged guide surface 34d. Thus, the position of the fishing line L toward the spool 4 is displaced on the side of the first bail support member 7 on the circumferential surface of the line roller 23 so that the line twist that is opposite to the line twist in the line feeding mode is generated. Also, when the fishing line is brought into contact with the line guide surface 34d, the line twist that is opposite to the line twist in the line releasing mode is applied to the fishing line that is in contact with the line guide surface 34d by the rotation of the line guide surface 34d caused by the rotation of the line roller 23. However, since the angular portion is formed in the inner circumferential end portion of the line guide surface 34d, the fishing line L is liable to follow the inner circumferential end portion so that the precision of the line twist at the first slant surface 34c may be enhanced.

In this case, since the fishing line L is displaced toward the stationary shaft cover 21, it is possible to always displace the fishing line L, guided by the line roller 23, on the circumferential surface of the line roller 23 from the stationary shaft cover 21 side to the first bail support member 7 side to thereby generate the stable line twist. In addition, since the flanged portion is formed in the line guide surface 34d so that the portion on the side of the stationary shaft cover 21 has a larger diameter, even if the fishing line L is brought into contact with the line guide surface 34d, the line twist in the same direction is generated. For this reason, the direction of the generated line twist may be always opposite to the line twist in the line feeding mode, and the precision of the generation of the opposite line twist may be enhanced.

### Second Embodiment

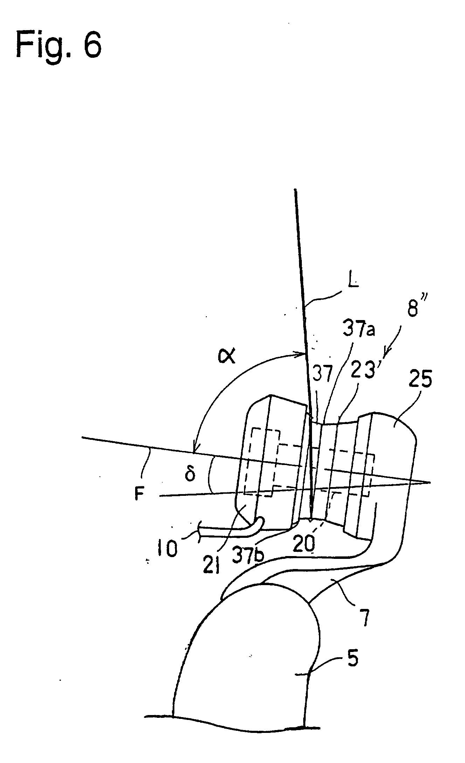

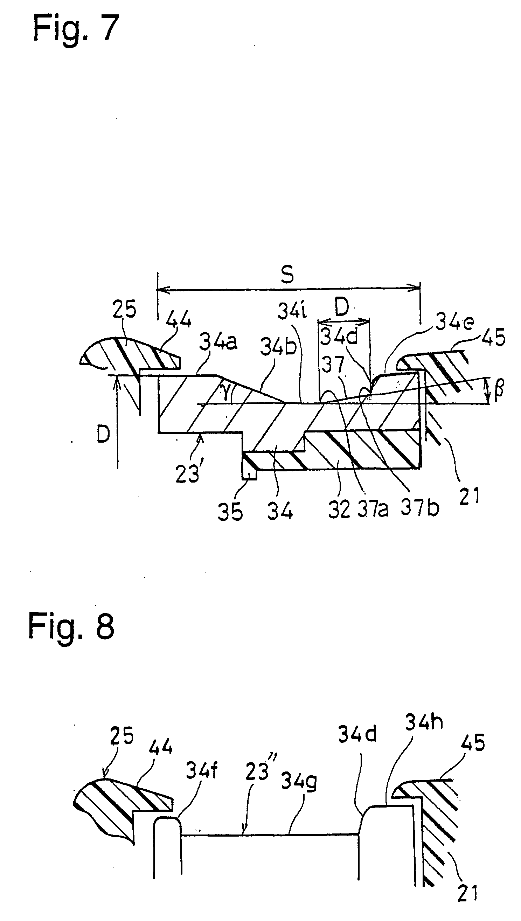

As shown in Fig. 6 and 7, there is a second embodiment of a line roller 23' of a line guide mechanism 8' which includes many of the features of the line roller 23 of the first embodiment. For instance, the line roller 23' includes: a parallel surface 34a, a tapered surface 34b, a line guide surface 34d and a second slant surface 34e. However, the line roller 23' also includes an arcuate surface 34i and a first slant surface 37. The various surfaces of the line roller 23' are formed in the following order beginning at the left side of Fig. 7: the parallel surface 34a, the tapered surface 34b, the arcuate surface 34i, the first slant surface 37, the line guide surface 34d and the second slant surface 34e.

The parallel surface 34a and the maximum diameter portion (at the right end in Fig. 7) of the second slant surface 34e have generally the same outer diameter. The outer diameter of the arcuate surface 34i is smaller than the outer diameter of the parallel surface 34a and the second slant surface 34e. The tapered surface 34b is formed so as to smoothly connect the parallel surface 34a and the arcuate surface 34i to each other. It is preferable that a taper angle y of the tapered surface 34b is in the range of, for example, 5 to 10 degrees. The arcuate surface 34i is formed so that its contour defines an arc having a radius of, for example, 100 to 500 mm where the center point of the radius is located radially outward from the first slant surface 37.

The first slant surface 37 is slanted so that its diameter increases going toward the right side of Fig. 7.

It is preferable that slant angle β of the first slant surface 37 be in the range of 0.5 to 10 degrees. It is preferable that the length of the first slant surface 37 is in the range of 1 to 40% of the entire length s. As shown in Fig. 6, the first slant surface 37 is formed for the purpose of guiding the fishing line L into contact with the line roller 23' at the end portion 37b of the first slant surface 37 as the fishing line L approaches the mechanism 8' from a guide (not shown) of a fishing rod (not shown). In other words, as the fishing line L approaches the line guide mechanism 8', it first contacts the line roller 32' on the first slant surface 37 at the end portion 37b. The fishing line L then wraps part way around the line roller 23', as shown in Fig. 6, until it engages the end portion 37a of the first slant surface 37, which is the small diameter side of the first slant surface 37. The fishing line L then extends toward the spool 4 from the end portion 37a on the small diameter side of the first slant surface 37. Therefore, as the fishing line L is wound around the spool 4, the fishing line L follows a path that is slanted and displaced toward the first bail support member 7 on the first slant surface 37. Thus, the fishing line L is slanted and displaced toward the first bail support member 7 at a predetermined interval on the first slant surface 37 so that the twist in the opposite direction to the twist in a line releasing mode may be generated in the fishing line L in contact with the rotating line roller 23' with high precision.

The line guide surface 34d is formed in the same manner as in the first embodiment. The fishing line L displaced toward the stationary shaft cover 21 in the line winding mode is brought into contact with the line guide surface 34d. The height and the length in the width direction of the line guide surface 34d and the maximum diameter of the line roller 23' are the same as those of the first embodiment.

The small diameter end portion 37a and the large diameter end portion 37b of the first slant surface 37 are formed in angular shapes in cross section, respectively. If the end portions 37a and 37b are not rounded but thus angularly beveled, as shown in Fig. 6, the fishing line L in contact with the line roller 23' is hardly displaced in the axial direction at the end portion 37b. The fishing line L is positioned with high precision, and at the same time, the fishing line released away from the line roller 23' toward the spool 4 is hardly displaced in the axial direction at the end portion 37a. Thus, the fishing line may be positioned with high precision. For this reason, the phase of the fishing line wound along the first slant surface 37 is determined at a predetermined value and the line twist in the opposite direction is generated in the fishing line slanted and located on the second slant surface 37 may be generated with higher precision.

It should be appreciated that the line F in Fig. 6 defines generally the same angle α as was discussed above with respect to the first embodiment, however, the angle α in Fig. 6 may be slightly smaller than in the first embodiment. The line F is generally parallel to the rotational axis of the line roller 23 and further corresponds to the center of the stationary shaft 20. Further, the line F in Fig. 6 is not perpendicular to the rotational axis of the rotor 3, but rather the line F in Fig. 6 is clearly angularly offset from a plane that is perpendicular to the rotational axis of the rotor 3. An angle δ is defined between this plane and the line F. Therefore, the rotational axis of the line roller 23 is offset from the plane defined perpendicular to the rotational axis of the rotor 3 and is also offset from line T_{L} as was described above with respect to the first embodiment in Fig. 2.

In such a line guide mechanism 8', in the fishing line winding mode, the fishing line is guided to the line roller 23' by the rotation of the rotor 3 with its direction being changed and is wound around the outer circumference of the spool 4. At this time, since the fishing line is displaced toward the line guide surface 34d and the first slant surface 37 is provided, the fishing line is positioned and brought into contact with the circumference surface by the end portion 37b on the large diameter side of the first slant surface 37, slanted and disposed to the end portion 37a on the small diameter and is positioned at the end portion 37a of the small diameter side and released toward the spool 4. Thus, the position where the fishing line is released toward the spool 4 is displaced obliquely on the side of the first bail support member 7 on the circumferential surface of the line roller 23' so that the line twist opposite the line twist in the line feeding mode may be generated.

In this case, since as the fishing line L is wound in and first engages the line roller 23' proximate the line guide surface 34d having a relatively large diameter proximate the stationary shaft cover 21 and the position where the fishing line is in contact with the line roller 23' and the position where the fishing line is released away from the line roller 23' are biased into place by the taper of first slant surface 37, it is possible to generate the stable line twist by always displacing the fishing line toward the first bail support member 7 on the circumferential surfaces of the line roller 23'. For this reason, the direction of the generated line twist may be always opposite to the line twist in the line feeding mode, and the precision of the generation of the opposite line twist may be enhanced.

### Other Modifications and Embodiments

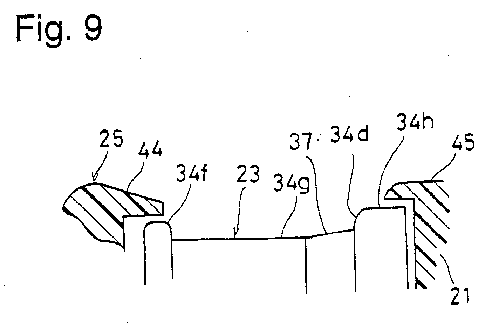

(a) In the first embodiment, the parallel surface 34a, the tapered surface 34b, the first slant surface 34c, the line guide surface 34d and the second slant surface 34e are formed continuously on the circumferential surface of the line roller 23. However, the line guide surface 34d may be employed with various other surfaces of the line roller 23 being given other arrangements. For example, in a third embodiment Fig. 8, a first parallel surface 34f, a second parallel surface 34g having a small diameter, a line guide surface 34d and a third parallel surface 34h having a large diameter are formed continuously. In this case, the first and third parallel surfaces 34f and 34h having the large diameters have substantially the same diameter. The respective shapes of the line guide surface 34d are the same as those of the first embodiment. With such an arrangement, it is also possible to ensure the same effect as that of the first embodiment.
(b) In the second embodiment described above, the parallel surface 34a, the tapered surface 34b, the arcuate surface 34i, the first slant surface 37, the line guide surface 34d and the second slant surface 34e are formed continuously on the circumferential surface of the line roller 23. However, the first slant surface 37 and the line guide surface 34d may be provided other portions of the line roller 23' being given other arrangement. For example, in Fig. 9, a fourth embodiment is shown with a first parallel surface 34f, a second parallel surface 34g having a small diameter, a slant surface 37, a line guide surface 34d and a third parallel surface 34h having a large diameter are formed continuously. In this case, the first and third parallel surfaces 34f and 34h having the large diameters have substantially the same diameter. The respective shapes of the slant surface 37 and the line guide surface 34d are the same as those of the second embodiment. With such an arrangement, it is also possible to ensure the same effect as that of the second embodiment.
(c) In the first and second embodiments 1 and 2, the line guide surface 34d is slanted. However, the line guide surface may be a wall surface vertical to the axis of the line roller 23.
(d) In the foregoing embodiments, the inner circumferential end portion of the line guide surface 34d is formed into an angular shape so that the line twist is mainly generated at the border portion between the line guide surface 34d and the first slant surface 34c. However, it is possible to generate the line twist mainly at the first slant surface 34c by rounding this portion.

### Effect Of The Invention

In each embodiment of the present invention, the fishing line guide mechanisms for a spinning reel are each configured to direct the fishing line toward a portion of the line roller having a large diameter on the side of the stationary shaft cover, specifically the line guide surface 34d, it is possible to generate the stable line twist by always displacing the fishing line toward the bail support member on the circumferential surface of the line roller. In addition, since the line guide surface 34d is formed into a flanged shape having an increasing diameter going toward the stationary shaft cover, even if the fishing line is brought into contact with the line guide surface, the line twist in the same direction is generated. For this reason, the direction of the generated line twist may be always opposite to the line twist in the line feeding mode, and the precision of the generation of the opposite line twist may be enhanced.

Various details of the invention may be changed without departing from its spirit nor its scope. Furthermore, the foregoing description of the embodiments according to the present invention is provided for the purpose of illustration only, and not for the purpose of limiting the invention as defined by the appended claims and their equivalents.

## Claims

1. A spinning reel comprising:
a reel body having a handle;
a rotor rotatably supported on said reel body and having a first and a second rotor arm;
a spool disposed on the front end of said rotor and around which a fishing line is wound;
first and a second bail support members mounted for pivotal movement at tip ends of said first and said second rotor arms respectively; and
a fishing line guide mechanism mounted on said first bail support member for guiding the fishing line on to the spool, **characterized in that** said fishing line guide mechanism comprises;
a stationary shaft (20) fixed at a first end thereof to the first bail support member (7);
a stationary shaft cover (21) retained on a second end of said stationary shaft at a spaced apart interval from the first bail support member (7);
a line roller (23) rotatably supported on said stationary shaft (20) between the first bail support member (7) and said stationary shaft cover (21) for guiding the fishing line onto the spool (4) as the fishing line is wound around the spool (4) by rotation of the rotor (3); and
a reverse twist generating means including a first positioning means, a second positioning means and a biasing means, said second positioning means being on a side of said line roller (23) proximate the first bail support member (7) relative to said stationary shaft (20) and said first positioning means being on a side of said second positioning means opposite from the first bail support member (7),
said first positioning means being configured for directing engagement between said line roller (23) and the fishing line as the fishing line extends from a guide of a fishing rod toward said line roller in response to rotation of the rotor (3),
said second positioning means configured for directing engagement between said line roller (23) and the fishing line as the fishing line extends from said line roller (23) toward the spool (4) in response to rotation of the rotor (3), and
said biasing means configured for biasing the fishing line toward said first positioning means,
said reverse twist generating means for generating a twist in the fishing line that is reversed from a direction of twisting which occurs in the fishing line in response to the fishing line being released from the spool.

2. A spinning reel according to Claim 1, wherein said first positioning means comprises a line guide surface (34d) formed on a circumferential surface of said line roller (23), said line guide surface having a varying diameter that increases toward said stationary shaft cover (21).

3. A spinning reel according to Claim 2, wherein said second positioning means is an inflection point on said circumferential surface of said line roller, said inflection point having a small diameter, said small diameter defining a smallest diameter of all portions of said circumferential surface of said line roller.

4. A spinning reel according to any proceeding Claim 2, wherein said biasing means comprises an orientation of said stationary shaft (20) wherein an angle defined between a portion of the fishing line and a straight line said angle lying in a plane defined by said portion of the fishing line and said straight line, said portion of the fishing line extending from a point of contact with said line roller (23) to the guide of the fishing rod, said straight line being parallel with an axis of rotation of said stationary shaft and extending from said point of contact, said angle being an acute angle.

5. A spinning reel according to Claim 4, wherein the pair of rotor arms (5,6) of the rotor (3) of the spinning reel pivot about a pivot line extending therebetween, the pivot line further extending through the spool (4) proximate a central axis of the rotor (3), a tangential line (T_{L}) being defined about the central axis of the rotor (3) at a radius defined proximate one of the pair of rotor arms, said tangential line being perpendicular to said pivot line, said axis of rotation of said stationary shaft and said tangential line (T_{L}) defining an acute angle such that one end of said stationary shaft is closer to the spool (4) that an other end of said stationary shaft.

6. A spinning reel according to any of Claims 2 to 5, wherein said line guide surface is an annular, ring-shaped surface that is slightly inclined with respect to a plane defined perpendicular to said axis of rotation of said stationary shaft (20).

7. A spinning reel according to any of claims 2 to 5, wherein said line guide surface is an annular surface that is perpendicular to said stationary shaft (20).

8. A spinning reel according to any of Claims 2 to 5 wherein, said line guide surface is inclined toward said stationary shaft cover (21).

9. A spinning reel according to any of the Claims 4 to 8, wherein a distance in an axial direction, relative to said axis of rotation of said stationary shaft (20), between an inner circumferential portion of said line guide surface and an outer circumferential portion of said line guide surface is in the range of 1 to 15% of a maximum length of said line roller (23).

10. A spinning reel according to Claim 9, wherein a radial height of said line guide surface between said inner circumferential portion of said line guide surface and said outer circumferential portion of said line guide surface is in the range of 1 to 15% of a maximum outer diameter of said line roller (23).

11. A spinning reel according to Claim 9 or 10, wherein said outer circumferential portion of said line guide surface is formed with a chamfer in a cross section thereof.

12. A spinning reel according to Claim 11, wherein a radius of said chamfer is in the range of 0.1 to 0.5mm

13. A spinning reel according to any of Claims 9 to 12, wherein said inner circumferential portion of said line guide surface is formed with a corner having an angular shape in cross section.

## Patentansprüche

1. Eine Spinnrolle, die Folgendes beinhaltet:
einen Rollenkörper, der einen Drehknopf aufweist;
einen Rotor, der auf dem Rollenkörper drehbar gestützt ist und einen ersten und einen zweiten Rotorarm aufweist;
eine Spule, die auf dem vorderen Ende des Rotors angeordnet ist und um die eine Angelschnur gewickelt ist;
ein erstes und zweites Bügelstützelement, die jeweils zur schwenkbaren Bewegung an den Spitzenenden des ersten und zweiten Rotorarms montiert sind; und
einen Angelschnurführungsmechanismus, der auf dem ersten Bügelstützelement montiert ist, um die Angelschnur auf die Spule zu führen, **dadurch gekennzeichnet, dass** der Angelschnurführungsmechanismus Folgendes beinhaltet:
eine ortsfeste Welle (20), die an einem ersten Ende davon an dem ersten Bügelstützelement (7) befestigt ist;
eine ortsfeste Wellenabdeckung (21), die auf einem zweiten Ende der ortsfesten Welle mit Abstand von dem ersten Bügelstützelement (7) gehalten ist;
eine Schnurrolle (23), die drehbar auf der ortsfesten Welle (20) zwischen dem ersten Bügelstützelement (7) und der ortsfesten Wellenabdeckung (21) gestützt ist, um die Angelschnur auf die Spule (4) zu führen, während die Angelschnur um die Spule (4) durch Drehen des Rotors (3) gewickelt wird; und
ein Rückdrehungserzeugungsmittel, das ein erstes Positionierungsmittel, ein zweites Positionierungsmittel und ein Vorspannmittel umfasst, wobei das zweite Positionierungsmittel auf einer Seite der Schnurrolle (23) nahe dem ersten Bügelstützelement (7) relativ zu der ortsfesten Welle (20) befindlich ist und das erste Positionierungsmittel auf einer dem ersten Bügelstützelement (7) gegenüberliegenden Seite des zweiten Positionierungsmittels befindlich ist,
wobei das erste Positionierungsmittel konfiguriert ist, um den Eingriff zwischen der Schnurrolle (23) und der Angelschnur zu leiten, während die Angelschnur sich von einer Führung einer Angelrute in Richtung der Schnurrolle als Reaktion auf die Drehung des Rotors (3) erstreckt,
das zweite Positionierungsmittel konfiguriert ist, um den Eingriff zwischen der Schnurrolle (23) und der Angelschnur zu leiten, während die Angelschnur sich von der Schnurrolle (23) in Richtung der Spule (4) als Reaktion auf die Drehung des Rotors (3) erstreckt, und
das Vorspannmittel konfiguriert ist, um die Angelschnur in Richtung des ersten Positionierungsmittels vorzuspannen,
das Rückdrehungserzeugungsmittel zum Erzeugen einer Verdrehung in der Angelschnur, die zu einer Richtung einer in der Angelschnur als Reaktion auf das Ausgeben der Angelschnur aus der Spule vorkommenden Verdrehung umgekehrt ist.

2. Spinnrolle gemäß Anspruch 1, wobei das erste Positionierungsmittel eine Schnurführungsfläche (34d), die auf einer Umfangsfläche der Schnurrolle (23) gebildet ist, beinhaltet, wobei die Schnurführungsfläche einen variierenden Durchmesser, der in Richtung der ortsfesten Wellenabdeckung (21) zunimmt, aufweist.

3. Spinnrolle gemäß Anspruch 2, wobei das zweite Positionierungsmittel ein Wendepunkt auf der Umfangsfläche der Schnurrolle ist, wobei der Wendepunkt einen kleinen Durchmesser aufweist, wobei der kleine Durchmesser einen kleinsten Durchmesser aller Abschnitte der Umfangsfläche der Schnurrolle definiert.

4. Spinnrolle gemäß einem der vorhergehenden Ansprüche, wobei das Vorspannmittel ein Ausrichten der ortsfesten Welle (20) beinhaltet, wobei ein Winkel θ zwischen einem Abschnitt der Angelschnur und einer Geraden definiert ist, wobei der Winkel in einer durch den Abschnitt der Angelschnur und die Gerade definierten Ebene liegt, wobei der Abschnitt der Angelschnur sich von einem Beruhrungspunkt mit der Schnurrolle (23) zu der Führung der Angelrute erstreckt, wobei die Gerade parallel zu einer Drehachse der ortsfesten Welle liegt und sich von einem Berührungspunkt erstreckt, wobei der Winkel ein spitzer Winkel ist.

5. Spinnrolle gemäß Anspruch 4, wobei das Paar Rotorarme (5, 6) des Rotors (3) der Spinnrolle um eine sich dazwischen erstreckende Schwenklinie schwenken, wobei sich die Schwenklinie durch die Spule (4) nahe einer Zentralachse des Rotors (3) weiter erstreckt, wobei eine tangentiale Linie (T_{L}) um die Zentralachse des Rotors (3) bei einem Radius definiert ist, der nahe einem von dem Paar Rotorarme definiert ist, wobei die tangentiale Linie zu der Schwenklinie senkrecht liegt, wobei die Drehachse der ortsfesten Welle und die tangentiale Linie (T_{L}) einen spitzen Winkel definieren, so dass ein Ende der ortsfesten Welle näher an der Spule (4) als ein anderes Ende der ortsfesten Welle liegt.

6. Spinnrolle gemäß einem der Ansprüche 2 bis 5, wobei die Schnurführungsfläche eine kranzförmige, ringförmige Fläche ist, die mit Bezug auf eine Ebene, die senkrecht zu der Drehachse der ortsfesten Welle (20) definiert ist, etwas geneigt ist.

7. Spinnrolle gemäß einem der Ansprüche 2 bis 5, wobei die Schnurführungsfläche eine kranzförmige Fläche ist, die zu der ortsfesten Welle (20) senkrecht liegt.

8. Spinnrolle gemäß einem der Ansprüche 2 bis 5, wobei die Schnurführungsfläche in Richtung der ortsfesten Wellenabdeckung (21) geneigt ist.

9. Spinnrolle gemäß einem der Ansprüche 4 bis 8, wobei eine Entfernung in einer axialen Richtung, relativ zu der Drehachse der ortsfesten Welle (20), zwischen einem Innenumfangsabschnitt der Schnurführungsfläche und einem Außenumfangsabschnitt der Schnurführungsfläche in dem Bereich von 1 bis 15 % einer Maximallänge der Schnurrolle (23) liegt.

10. Spinnrolle gemäß Anspruch 9, wobei eine Radialhöhe der Schnurführungsfläche zwischen dem Innenumfangsabschnitt der Schnurführungsfläche und dem Außenumfangsabschnitt der Schnurführungsfläche im Bereich von 1 bis 15 % eines maximalen Außendurchmessers der Schnurrolle (23) liegt.

11. Spinnrolle gemäß Anspruch 9 oder 10, wobei der Außenumfangsabschnitt der Schnurführungsfläche mit einer Abschrägung in einem Querschnitt von diesem gebildet ist.

12. Spinnrolle gemäß Anspruch 11, wobei ein Radius der Abschrägung im Bereich von 0,1 bis 0,5 mm liegt.

13. Spinnrolle gemäß einem der Ansprüche 9 bis 12, wobei der Innenumfangsabschnitt der Schnurführungsfläche mit einer Ecke, die im Querschnitt eine Winkelform aufweist, gebildet ist.

## Revendications

1. Un moulinet à tambour comportant :
un corps de moulinet ayant une poignée ;
un rotor soutenu de façon à pouvoir tourner sur ledit corps de moulinet et ayant un premier et un deuxième bras de rotor ;
une bobine disposée sur l'extrémité avant dudit rotor et autour de laquelle une ligne de pêche est enroulée ;
des premier et deuxième éléments de support d'anse montés de façon à se déplacer par pivotement à des extrémités de bout desdits premier et deuxième bras de rotor respectivement ; et
un mécanisme de guidage de ligne de pêche monté sur ledit premier élément de support d'anse destiné à guider la ligne de pêche sur la bobine, **caractérisé en ce que** ledit mécanisme de guidage de ligne de pêche comporte ;
un arbre stationnaire (20) fixé à une première extrémité de celui-ci au premier élément de support d'anse (7) ;
une chape d'arbre stationnaire (21) retenue sur une deuxième extrémité dudit arbre stationnaire à un intervalle espacé du premier élément de support d'anse (7) ;
un galet de ligne (23) soutenu de façon à pouvoir tourner sur ledit arbre stationnaire (20) entre le premier élément de support d'anse (7) et ladite chape d'arbre stationnaire (21) destiné à guider la ligne de pêche jusque sur la bobine (4) à mesure que la ligne de pêche est enroulée autour de la bobine (4) par rotation du rotor (3) ; et
un moyen générateur de torsion inverse comprenant un premier moyen de positionnement, un deuxième moyen de positionnement et un moyen de décalage, ledit deuxième moyen de positionnement étant sur un côté dudit galet de ligne (23) à proximité du premier élément de support d'anse (7) relativement audit arbre stationnaire (20) et ledit premier moyen de positionnement étant sur un côté dudit deuxième moyen de positionnement à l'opposé du premier élément de support d'anse (7),
ledit premier moyen de positionnement étant configuré pour diriger la mise en prise entre ledit galet de ligne (23) et la ligne de pêche à mesure que la ligne de pêche s'étend depuis un guide d'une canne à pêche vers ledit galet de ligne en réponse à la rotation du rotor (3),
ledit deuxième moyen de positionnement configuré pour diriger la mise en prise entre ledit galet de ligne (23) et la ligne de pêche à mesure que la ligne de pêche s'étend depuis ledit galet de ligne (23) vers la bobine (4) en réponse à la rotation du rotor (3), et
ledit moyen de décalage configuré pour décaler la ligne de pêche vers ledit premier moyen de positionnement,
ledit moyen générateur de torsion inverse destiné à générer une torsion dans la ligne de pêche qui est inversée depuis une direction de torsion, laquelle se produit dans la ligne de pêche en réponse à la libération de la ligne de pêche de la bobine.

2. Un moulinet à tambour selon la revendication 1, dans lequel ledit premier moyen de positionnement comporte une surface de guidage de ligne (34d) formée sur une surface circonférentielle dudit galet de ligne (23), ladite surface de guidage de ligne ayant un diamètre variable qui augmente vers ladite chape d'arbre stationnaire (21).

3. Un moulinet à tambour selon la revendication 2, dans lequel ledit deuxième moyen de positionnement est un point d'inflexion sur ladite surface circonférentielle dudit galet de ligne, ledit point d'inflexion ayant un petit diamètre, ledit petit diamètre définissant un diamètre le plus petit de toutes les portions de ladite surface circonférentielle dudit galet de ligne.

4. Un moulinet à tambour selon n'importe quelle revendication précédente, dans lequel ledit moyen de décalage comporte une orientation dudit arbre stationnaire (20) dans lequel un angle 0 est défini entre une portion de la ligne de pêche et une ligne droite, ledit angle se trouvant dans un plan défini par ladite portion de la ligne de pêche et ladite ligne droite, ladite portion de la ligne de pêche s'étendant d'un point de contact avec ledit galet de ligne (23) jusqu'au guide de la canne à pêche, ladite ligne droite étant parallèle à un axe de rotation dudit arbre stationnaire et s'étendant depuis ledit point de contact, ledit angle étant un angle aigu.

5. Un moulinet à tambour selon la revendication 4, dans lequel la paire de bras de rotor (5, 6) du rotor (3) du moulinet à tambour pivote autour d'une ligne de pivotement s'étendant entre ceux-ci, la ligne de pivotement s'étendant de plus au travers de la bobine (4) à proximité d'un axe central du rotor (3), une ligne tangentielle (T_{L}) étant définie autour de l'axe central du rotor (3) et à un rayon défini à proximité d'un bras de rotor de la paire de bras de rotor, ladite ligne tangentielle étant perpendiculaire à ladite ligne de pivotement, ledit axe de rotation dudit arbre stationnaire et de ladite ligne tangentielle (T_{L}) définissant un angle aigu de telle sorte qu'une extrémité dudit arbre stationnaire soit plus proche de la bobine (4) qu'une autre extrémité dudit arbre stationnaire.

6. Un moulinet à tambour selon n'importe lesquelles des revendications 2 à 5, dans lequel ladite surface de guidage de ligne est une surface annulaire configurée en bague qui est légèrement inclinée par rapport à un plan défini de façon perpendiculaire audit axe de rotation dudit arbre stationnaire (20).

7. Un moulinet à tambour selon n'importe lesquelles des revendications 2 à 5, dans lequel ladite surface de guidage de ligne est une surface annulaire qui est perpendiculaire audit arbre stationnaire (20).

8. Un moulinet à tambour selon n'importe lesquelles des revendications 2 à 5, dans lequel ladite surface de guidage de ligne est inclinée vers ladite chape d'arbre stationnaire (21).

9. Un moulinet à tambour selon n'importe lesquelles des revendications 4 à 8, dans lequel une distance dans une direction axiale, relativement audit axe de rotation dudit arbre stationnaire (20), entre une portion circonférentielle interne de ladite surface de guidage de ligne et une portion circonférentielle externe de ladite surface de guidage de ligne est dans la gamme allant de 1 à 15 % d'une longueur maximale dudit galet de ligne (23).

10. Un moulinet à tambour selon la revendication 9, dans lequel une hauteur radiale de ladite surface de guidage de ligne entre ladite portion circonférentielle interne de ladite surface de guidage de ligne et ladite portion circonférentielle externe de ladite surface de guidage de ligne est dans la gamme allant de 1 à 15 % d'un diamètre externe maximal dudit galet de ligne (23).

11. Un moulinet à tambour selon la revendication 9 ou la revendication 10, dans lequel ladite portion circonférentielle externe de ladite surface de guidage de ligne est formée avec un biseau dans une coupe transversale de celle-ci.

12. Un moulinet à tambour selon la revendication 11, dans lequel un rayon dudit biseau est dans la gamme allant de 0,1 à 0,5 mm.

13. Un moulinet à tambour selon n'importe lesquelles des revendications 9 à 12, dans lequel ladite portion circonférentielle interne de ladite surface de guidage de ligne est formée avec un coin ayant une configuration angulaire en coupe transversale.
